# DEMANDE DE BREVET EUROPEEN

(11) **EP 1 565 013 A1**
(43) Date de publication de la demande: **17.08.2005**
(21) Numéro de dépôt: 05290296.2
(22) Date de dépôt: 10.02.2005
(51) Int. Cl.: H04Q 7/22, H04Q 7/32, H04Q 7/38, H04L 29/06, H04L 12/28

(54) **Ensemble pour le contrôle de la localisation d'un terminal de téléphone**

(30) Priorité: 10.02.2004 FR 0401262
(71) Demandeur: Bouygues Telecom, 92100 Boulogne Billancourt (FR)
(72) Inventeur: Passet, Georges, 78720 Cernay La Ville (FR)
(74) Mandataire: Callon de Lamarck, Jean-Robert

(57) **Abrégé**

L'invention concerne, selon un premier aspect, un ensemble pour contrôler la fourniture d'informations de localisation comprenant un terminal (1) de téléphonie mobile apte à interagir à distance avec une ou plusieurs applications (5) dites utilisatrices mettant en oeuvre des services utilisant des informations de localisation de l'utilisateur dudit terminal, caractérisé en ce qu'il comprend un module (2) de contrôle de localisation apte à être connecté audit terminal (1) par l'utilisateur, ledit module (2) comportant des moyens (8) pour autoriser ou non la fourniture d'informations de localisation de l'utilisateur du terminal à une ou plusieurs applications utilisatrices.

L'invention concerne également un terminal de téléphonie mobile et un module de contrôle de localisation pour un ensemble selon le premier aspect de l'invention

## Description

L'invention concerne un ensemble servant à contrôler l'accès à des informations de localisation d'un utilisateur de terminal de téléphonie mobile.

L'invention propose plus précisément un ensemble pour activer ou désactiver de manière sélective la transmission des informations de localisation par un terminal de téléphonie mobile.

L'utilisateur d'un terminal de téléphonie mobile est localisable car il dispose avec son terminal d'un dispositif permettant la détermination de sa position géographique. Les moyens permettant de déterminer cette position peuvent appartenir au terminal lui-même (par exemple un récepteur GPS - initiales de l'expression anglo-saxonne Global Positioning System pour Système Mondial de Positionnement), ou encore être à distance de celui-ci (par exemple en utilisant le positionnement de la station de base par l'intermédiaire de laquelle il communique).

La position géographique du terminal peut être présentée à une personne qui recherche l'utilisateur du terminal ou encore être adressée à un prestataire qui l'utilisera pour offrir ses services en fonction du lieu où se trouve l'utilisateur à un instant déterminé.

On entend par application utilisatrice une application logicielle hébergée sur un serveur d'un prestataire proposant des services géodépendants (c'est-à-dire utilisant des informations de localisation d'utilisateur) aux utilisateurs de terminal de téléphonie mobile.

Les applications utilisatrices permettent, une fois réalisée la localisation d'un utilisateur de terminal de téléphonie mobile, d'envoyer audit utilisateur des informations relatives par exemple aux commerces, aux services, aux lieux remarquables situés à proximité de l'endroit où il se trouve.

Si l'on assiste aujourd'hui à un développement rapide des applications utilisatrices d'informations de localisation, il n'en reste pas moins que les implications de ce développement doivent être maîtrisées.

En effet, ces applications utilisatrices traitent des données à caractère personnel (les informations de localisation) et sont donc potentiellement intrusives dans la vie privée des utilisateurs.

L'attente des utilisateurs de services géodépendants est ainsi mise en balance avec leur volonté légitime de voir leur vie privée respectée.

Or, pour l'heure, seule une approche basée sur des principes incontournables a été retenue : les utilisateurs doivent ainsi être en droit de pouvoir exercer un certain contrôle sur la diffusion de leurs informations de localisation.

Les recommandations de la CNIL (Commission Nationale de l'Informatique et des Libertés) énoncent ainsi que nul ne doit pouvoir être localisé à son insu (à l'exception des situations de recours aux services d'urgence ou de secours).

La transmission à un tiers (en particulier à une application utilisatrice) d'informations de localisation doit ainsi faire l'objet d'une information des personnes concernées et doit nécessairement être soumise à leur consentement.

Afin de satisfaire aux recommandations de la CNIL, il a été proposé une solution selon laquelle la fonction de localisation d'un terminal de téléphonie mobile est par défaut inhibée, un message d'avertissement étant systématiquement transmis à l'utilisateur dudit terminal de manière à obtenir son consentement avant toute localisation.

Cette solution n'est cependant pas totalement satisfaisante pour l'utilisateur. Celui-ci, méfiant, peut effectivement estimer que des informations de localisation sont transmises sans qu'il en soit averti, ou sans qu'il n'ait donné son consentement. L'utilisateur n'a pas avec cette solution la garantie qu'il n'est pas « pisté » à son insu.

Des solutions mettant en ouvre des dispositifs matériels ont également été proposées.

Le document EP 1 113 678 propose ainsi l'intégration d'un circuit de contrôle dans un terminal de téléphonie mobile de manière à désactiver de manière sélective la transmission de l'information de localisation à une application utilisatrice requérant une telle information.

Lorsque l'information de localisation est requise, l'utilisateur peut être invité, via l'écran de son terminal, à autoriser ou non la transmission de cette information.

Le circuit peut en outre comporter un répertoire comportant des numéros (identifiant notamment des applications utilisatrices) habilités par l'utilisateur à toujours recevoir son information de localisation.

La solution proposée dans le document EP 1 113 678 n'est pas non plus satisfaisante et présente en particulier les limitations et inconvénients suivants.

Cette solution nécessite tout d'abord une implémentation matérielle particulière au niveau du terminal pour y intégrer le circuit de contrôle.

Du fait de cette implémentation particulière, la plupart des terminaux actuellement disponibles n'intègrent pas un tel circuit de contrôle.

Par ailleurs, l'utilisateur n'a aucune garantie qu'un message d'avertissement lui est systématiquement notifié et/ou que sa réponse est effectivement prise en compte. L'utilisateur n'a effectivement pas la maîtrise du circuit de contrôle intégré à son terminal.

On notera également que l'utilisateur doit en outre répondre au cas par cas à une requête d'information de localisation (sauf à utiliser le répertoire listant les applications utilisatrices autorisées à toujours recevoir cette information). Or cela peut être particulièrement contraignant pour l'usager, notamment lorsqu'une requête est régulièrement répétée (comme c'est le cas notamment d'un service d'aide à la navigation automobile qui, pour être efficace, nécessite une localisation régulière de l'utilisateur, par exemple toutes les vingt secondes).

Enfin si l'utilisateur peut utiliser le répertoire de numéros autorisés à recevoir l'information de localisation, la configuration d'un tel répertoire n'est pas des plus aisée pour un utilisateur commun.

Finalement cette solution ne permet pas de garantir à un utilisateur qu'il contrôle totalement la fourniture de sa localisation.

Un but de l'invention est de proposer une technique permettant de contrôler de manière souple et efficace l'accès aux informations de localisation depuis une ou plusieurs applications utilisatrices et de garantir totalement à un utilisateur que sa localisation n'est pas transmise à son insu.

A cet effet, l'invention propose, selon un premier aspect, un ensemble pour contrôler la fourniture d'informations de localisation comprenant un terminal de téléphonie mobile apte à interagir à distance avec une ou plusieurs applications dites utilisatrices mettant en oeuvre des services utilisant des informations de localisation de l'utilisateur dudit terminal, caractérisé en ce qu'il comprend un module de contrôle de localisation distinct du terminal et apte à être connecté audit terminal par l'utilisateur, ledit module comportant des moyens pour autoriser ou non la fourniture d'informations de localisation de l'utilisateur du terminal à une ou plusieurs applications utilisatrices.

Selon d'autres aspects, l'invention concerne également un terminal de téléphonie mobile et un module de contrôle de localisation pour un ensemble selon le premier aspect de l'invention.

D'autres caractéristiques, buts et avantages de l'invention apparaîtront à la lecture de la description détaillée qui va suivre, et au regard des dessins annexés, donnés à titre d'exemples non limitatifs et sur lesquels :
- la figure 1 est une représentation schématique illustrant le principe d'un système conforme à un mode de réalisation possible de l'invention ;
- les figures 2a, 2b et 2c sont des représentations schématiques illustrant différents cas de figure pour les échanges entre les différents éléments du système de la figure 1.

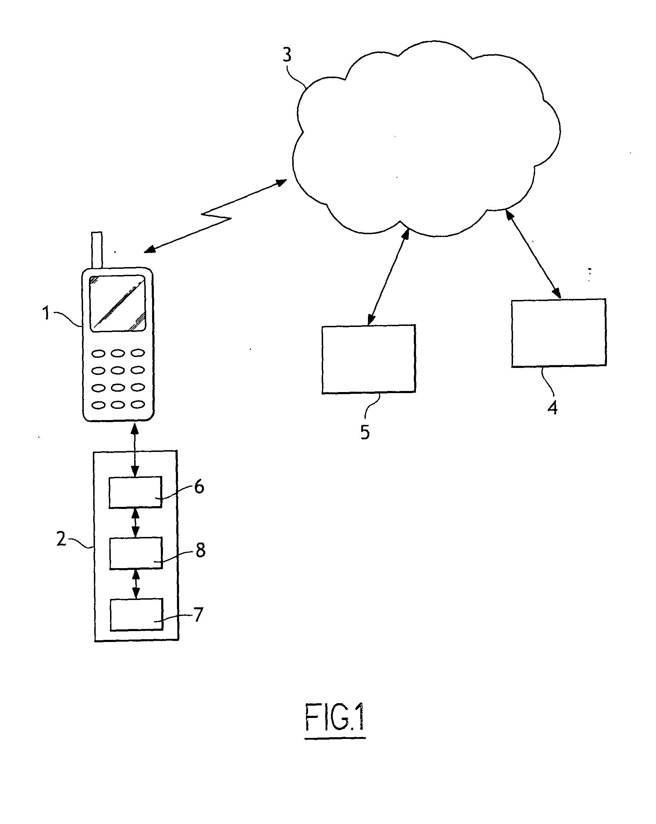

L'ensemble qui est illustré sur la figure 1 comporte un terminal de téléphonie mobile 1 auquel peut être connecté un module 2 de contrôle de localisation.

Par terminal de téléphonie mobile, on entend ici tout terminal classique permettant d'établir des communications par voie hertzienne, tel qu'un téléphone portable à clavier de numérotation et écran ou un terminal de type assistant personnel intégrant des moyens de communication.

Le terminal 1 et le module 2 de contrôle de localisation forment deux éléments distincts du système selon l'invention.

L'utilisateur dudit terminal 1 a avantageusement l'usage dudit module 2. De telle sorte, et comme cela sera plus particulièrement détaillé par la suite, l'utilisateur, en manipulant simplement ledit module 2, peut venir contrôler l'accès aux informations de localisation.

Le terminal 1 est apte à communiquer par l'intermédiaire d'un réseau de communication cellulaire 3 notamment avec des services d'urgence ou de secours 4 ou avec des services géodépendants proposés par des prestataires développant des applications 5 utilisatrices.

Ces applications utilisatrices sont développées de manière à fournir aux utilisateurs des services utilisant par exemple les technologies i-Mode (marque déposée) ou GPRS (initiales de l'expression anglo-saxonne General Packet Radio Service pour Service Général de Radiocommunication en mode Paquet).

D'une manière générale, l'utilisateur du terminal 1 peut être localisé ne serait-ce que parce que l'infrastructure du réseau cellulaire 3 permet de localiser ledit terminal 1 sur la base de la cellule où il se trouve.

Il est ci-après fait référence aux différentes techniques permettant de localiser un terminal de téléphonie mobile. Les différentes méthodes de localisation peuvent être regroupées par famille, à savoir :
- les méthodes mises en oeuvre par l'infrastructure du réseau ;
- les méthodes mises en oeuvre par un dispositif de localisation ;
- les méthodes hybrides ;
- les méthodes locales utilisant des émetteurs à faible portée du type Bluetooth ou WiFi, ou la lecture d'étiquettes à transpondeur.

L'infrastructure du réseau cellulaire permet de localiser le terminal sur la base de la cellule où il se trouve. La localisation selon la méthode Cell-ID résulte ainsi de la position de la station de base avec laquelle le terminal est en train de communiquer, ou de la position de la station qui capte une réponse à une commande de recherche de terminal lorsque le terminal, en veille, n'est pas en train de communiquer.

Cette méthode Cell-ID peut être améliorée en particulier par l'utilisation de la mesure du temps de propagation, proportionnel à la distance entre la station de base et le mobile.

La méthode de triangulation réseau est quant à elle une méthode mise en oeuvre par l'infrastructure du réseau reposant sur le traitement croisé de trois mesures ou plus. En effet, si un téléphone mobile dépend d'une seule cellule, il capte généralement le signal d'au moins deux autres stations. Les informations peuvent alors être croisées en fonction du temps de transmission du signal à chaque cellule.

On compte parmi les méthodes mises en oeuvre à l'aide d'un dispositif de localisation, les méthodes dites GNSS (Global Navigation Satellite System ou système de positionnement satellitaire, terme générique recouvrant le système GPS et le système Galileo entre autres)

Un terminal peut être équipé d'un dispositif de localisation, typiquement du type module GPS, permettant sa localisation en se servant d'une constellation de satellites en orbite autour de la Terre.

Parmi les méthodes hybrides, on compte l'A-GPS (Assisted Global Positioning System ou GPS assisté par le réseau) qui utilise le réseau mobile afin de transmettre au terminal des données d'assistance (données de corrections différentielles, éphémérides et données de correction d'horloge, etc.) permettant de réduire fortement le temps de réponse du GPS conventionnel.

On mentionne également des méthodes locales utilisant des bornes radio installées par exemple dans des lieux publics (aéroports, métro, rues passantes, etc.). Un terminal peut être connecté à une telle borne, notamment par liaison radio (par exemple selon les technologies Bluetooth ou Wi-Fi) de sorte que le réseau, disposant de la connaissance de la position des bornes, puisse opérer la localisation du dispositif.

Cette technologie locale peut également être mise en oeuvre à l'aide d'étiquettes à transpondeur disposées en des lieux connus par le réseau. Un terminal comportant des moyens d'émission/réception aptes à interroger une étiquette et à recevoir le signal émis par celle-ci peut par exemple être configuré de manière à ce que les étiquettes puissent déclencher l'envoi d'un message du dispositif vers le réseau qui, connaissant la localisation de ces étiquettes, en déduit une position du terminal.

Revenant à la description d'un mode de réalisation possible de l'invention, le réseau 3 dispose donc toujours de moyens (méthode Cell-ID, triangulation par exemple) permettant de localiser le terminal 1.

Dans le cadre de ce mode de réalisation possible de l'invention, le terminal et/ou le module 2 de contrôle de localisation peuvent en outre être équipés d'un dispositif de localisation (par exemple de type GPS ou A-GPS) ou encore comporter des moyens de mise en ouvre des méthodes locales de localisation du type de celles mentionnées ci-dessus.

Comme on l'a vu précédemment, la fonction de localisation du terminal 1 est par défaut inhibée, c'est-à-dire qu'une application utilisatrice ne peut avoir accès à l'information de localisation du terminal (sauf à ce que l'utilisateur autorise expressément la transmission de cette information, par exemple suite à la réception d'un message d'avertissement).

Bien entendu, les services d'urgence et de secours sont quant à eux toujours habilités à avoir accès à cette information de localisation.

D'une manière générale, le module 2 de contrôle de localisation comporte des moyens 6 gérant les échanges dudit module 2 avec le terminal 1 de téléphonie mobile.

Selon un mode de réalisation préféré de l'invention, ledit module 2 est apte à être mécaniquement fixé, et éventuellement électriquement relié, au terminal 1.

Le module 2 et le terminal 1 comportent avantageusement des moyens complémentaires assurant la fixation mécanique dudit module 2 sur le terminal 1.

Selon un exemple de réalisation élémentaire de l'invention, le module de contrôle de localisation peut ainsi consister en une simple clé physique que l'utilisateur vient enficher dans le terminal de manière à désinhiber la fonction de localisation du terminal.

La fixation du module au terminal est avantageusement amovible.

Ledit module peut ainsi être connecté au terminal 1 via le port série de ce dernier.

Un telle connexion du module au port série du terminal peut en outre permettre d'assurer l'alimentation électrique dudit module 2 à partir de la batterie dudit terminal 1.

Ladite connexion par le port série permet en outre l'échange de données selon des moyens connus en soi entre le module et le terminal.

Bien entendu, ledit module 2 peut disposer de ses propres moyens d'alimentation visant à assurer son autonomie électrique.

Selon un autre mode de réalisation possible de l'invention, le module 2 peut ne pas avoir à être fixé mécaniquement audit terminal pour que la connexion dudit module 2 et dudit terminal 1 puisse être réalisée.

Ledit module comporte alors de moyens autonomes d'alimentation.

Le module 2 et le terminal 1 disposent alors de moyens permettant d'échanger entre eux des données par liaison radio, typiquement selon les technologies sans fil Bluetooth ou WiFi.

La connexion du module 2 au terminal 1 est dans ce cas de figure également initiée par l'utilisateur, celui-ci actionnant à cet effet, et comme cela sera détaillé ci-après, des moyens formant interrupteur.

Le module 2 comporte en outre des moyens 8 pour autoriser ou on la fourniture d'informations de localisation du terminal à une application utilisatrice, en particulier en réponse à une requête d'accès aux informations de localisation issue de ladite application utilisatrice.

Lesdits moyens 8 pour autoriser ou non la fourniture d'informations de localisation sont plus particulièrement adaptés pour désinhiber la fonction de localisation du terminal, permettant ainsi à une ou plusieurs applications utilisatrices d'obtenir sur requête lesdites informations de localisation.

Selon un mode de réalisation particulier de l'invention, .ledit module peut comporter des moyens 7 formant interrupteur adaptés pour, sur commande manuelle de l'utilisateur, réaliser la connexion du module 2 au terminal 1 de sorte que lesdits moyens 8 pour autoriser ou non la transmission des informations de localisation à une ou plusieurs applications utilisatrices sont activés.

Ainsi, l'utilisateur peut choisir d'actionner lesdits moyens 7 formant interrupteur pour connecter le module 2 et le terminal 1, et désinhiber ainsi la fonction de localisation du terminal (moyens 7 formant interrupteur en position MARCHE).

L'utilisateur peut au contraire choisir d'actionner lesdits moyens formant interrupteur de manière à inhiber (ou tout du moins à conserver inhibée) la fonction de localisation du terminal (moyens 7 formant interrupteur en position ARRET).

Selon un autre mode de réalisation, la position MARCHE est automatiquement activée (et la fonction de localisation ainsi désinhibée) dès lors que ledit module et ledit terminal sont mécaniquement et électriquement reliés (notamment dès lors que ledit module est mis sous tension par le terminal).

La désinhibition de la fonction de localisation peut également être automatiquement réalisée dès lors que le module et le terminal sont synchronisés (c'est-à-dire dès lors que leurs fonctionnements sont en concordance).

On précise ici que, selon les différents cas de figure, la connexion du module 2 au terminal 1 peut être réalisée par :
- la simple fixation mécanique (et l'éventuelle liaison électrique) du module 2 au terminal 1 ;
- la fixation mécanique (et l'éventuelle liaison électrique) du module 2 au terminal 1 associée à la mise des moyens 7 du terminal formant interrupteur en position MARCHE ;
- la connexion à distance du module 2 au terminal 1 suite à la mise des moyens 7 du terminal formant interrupteur en position MARCHE ;

De manière plus précise, le terminal peut disposer d'un registre interne de gestion de la fourniture d'informations de localisation dont l'état indique si la fonction de localisation est inhibée (comme cela est par défaut le cas) ou non.

La connexion du module 2 au terminal 1 peut alors entraîner le changement d'état du registre de manière à ce qu'il indique que la fonction de localisation est désinhibée.

On mentionne également le cas où le terminal comporte des moyens logiciels de localisation (par défaut inhibés), par exemple sous la forme d'une application Java. La mise à jour de tels moyens de localisation est alors avantageusement aisément réalisée par simple téléchargement d'une nouvelle version desdits moyens logiciels. Dans un tel cas de figure, la connexion du module au terminal vient déverrouiller lesdits moyens logiciels de localisation.

Dans un autre cas de figure, lorsque le terminal reçoit une requête d'accès aux informations de localisation issue d'une application utilisatrice, ledit terminal peut systématiquement vérifier que le module 2 lui est bien connecté pour savoir si la fonction de localisation est désinhibée ou non.

En manipulant le module 2 de contrôle de localisation, un utilisateur peut ainsi contrôler par lui-même la fourniture d'informations de localisation à une ou plusieurs applications utilisatrices.

Lorsque l'utilisateur souhaite que ses informations de localisation puissent être transmises, il lui suffit de connecter ledit module 2 a son terminal.

Par ailleurs, la fonction de localisation étant ainsi désinhibée, toutes les requêtes de location sont acceptées. C'est notamment le cas pour les requêtes répétitives, du type de celles émanant d'un service d'aide à la navigation automobile.

En revanche, lorsque l'utilisateur ne souhaite plus que sa localisation soit connue, il lui suffit de déconnecter ledit module 2 du terminal (par exemple en désaccouplant le module du terminal ou encore en mettant les moyens 7 formant interrupteur en position ARRET).

L'utilisateur, réalisant lui-même la connexion du module 2 au terminal, est ainsi réellement maître de la fourniture de ses informations de localisation. L'utilisation du module de contrôle de localisation permet en particulier de garantir à un utilisateur qu'il n'est pas pisté à son insu.

On notera en outre que le module de contrôle de localisation peut être connecté à tout type de terminal de téléphonie mobile.

Lorsque les échanges entre le module et le terminal sont en particulier réalisés par l'intermédiaire du port série dudit terminal, on notera qu'aucune implémentation particulière n'est nécessaire au niveau de celui-ci.

On détaille ci-après un mode de réalisation avantageux de l'invention dans lequel un système cryptographique de type certificat numérique est utilisé pour crypter les échanges entre le module 2 et le terminal 1.

Un certificat est lié à l'utilisateur d'un terminal et peut contenir des renseignements tels que, par exemple, le numéro de série du terminal, l'identité de l'autorité de certification, une date d'expiration, le type de chiffrement utilisé, etc.

Ce certificat est lu soit une seule fois lors de la connexion du module au terminal (par exemple lors de la mise en position MARCHE des moyens 7 formant interrupteur du module 2 une fois ledit module mécaniquement fixé au terminal), soit consécutivement à chaque requête d'accès aux informations reçue par le terminal et issue d'une application utilisatrice.

Ce certificat étant reconnu comme valide au niveau du terminal, la fonction de localisation peut effectivement être désinhibée, et l'utilisateur peut finalement accéder aux services nécessitant cette fonction.

Deux clés privées identiques permettent par exemple de coder/décoder les messages transitant entre le terminal 1 et le module 2. Ces clés sont respectivement enregistrées sur la carte SIM du terminal 1 et sur le module 2.

De telle sorte, seul le module est habilité à désinhiber la fonction de localisation et un tiers ne peut donc pas venir échanger des messages avec le terminal en se faisant passer par ledit module. Le système selon l'invention dispose ainsi d'un niveau de confidentialité accru pour le client et les abus potentiels de certains services de mauvaises intentions sont en particulier limités.

Lorsque l'opérateur de téléphonie mobile de l'utilisateur ne dispose pas d'une telle clé privée, seule une localisation à partir du réseau est possible. Cela peut toutefois s'avérer problématique dans les cas d'appels d'urgence ou de perte/vol du terminal pour lesquels l'opérateur doit être à même de fournir la meilleure localisation qu'il peut techniquement recueillir. Afin de bénéficier des méthodes de localisation mises en oeuvre (au moins en partie) à l'aide d'un dispositif de localisation intégré au terminal et/ou au module 2 et plus précises que celles réalisées à l'aide de l'infrastructure du réseau, il est envisagé que l'opérateur puisse disposer de ladite clé privée. L'opérateur peut ainsi désinhiber, dans des situations bien précises (vol/perte du terminal, appels d'urgence), la fonction de localisation du terminal.

On détaille ci-après différents cas de figure possibles pour les échanges entre les différents éléments du système selon un mode de réalisation possible de l'invention.

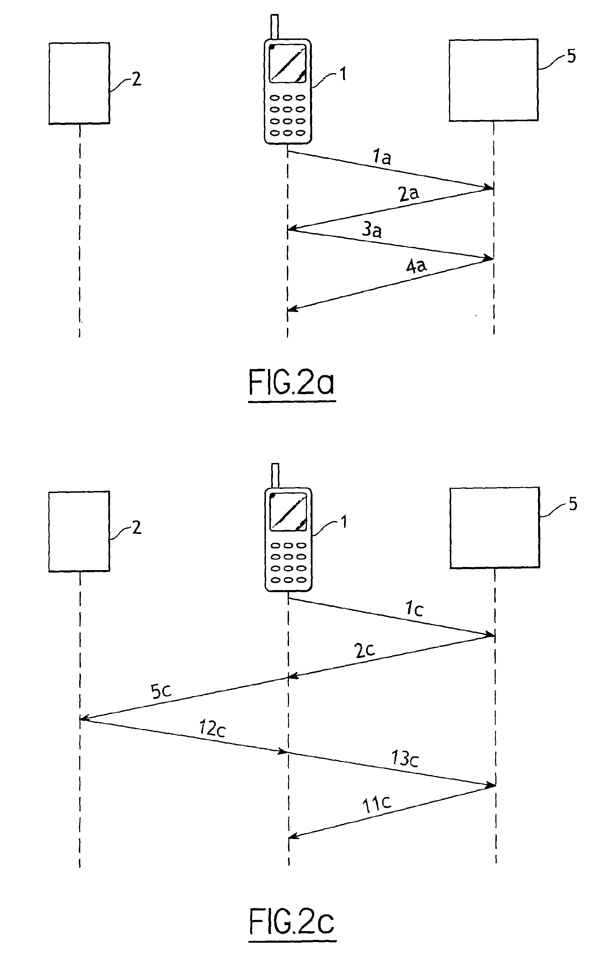

La figure 2a est une représentation schématique illustrant les échanges entre les différents éléments du système de la figure 1 lorsque le module 2 de contrôle de localisation n'est pas connecté au terminal 1, ou éventuellement lorsque le module 2 est connecté au terminal mais a ses moyens 7 formant interrupteur en position ARRET.

Dans de tels cas de figure, les fonctions de localisation du terminal sont inhibées.

Dans une première étape (étape 1a), l'utilisateur du terminal 1 requiert l'accès à un service basé sur une ou plusieurs localisations et mis en oeuvre par une application utilisatrice 5.

Dans une deuxième étape (étape 2a), ladite application utilisatrice 5 contacte l'utilisateur afin d'obtenir son assentiment pour qu'une localisation soit réalisée (le terminal recevant une requête de localisation émise par ladite application).

L'état autorisé ou non de la fourniture d'informations de localisation est alors déterminé.

Dans le cas de cette figure 2a, les fonctions de localisation étant inhibées, au cours d'une troisième étape (étape 3a), le terminal transmet une fin de non-recevoir à la requête de l'application utilisatrice. Le service nécessitant une localisation est alors rendu indisponible et au cours d'une quatrième étape (étape 4a), l'indisponibilité du service est notifiée au client.

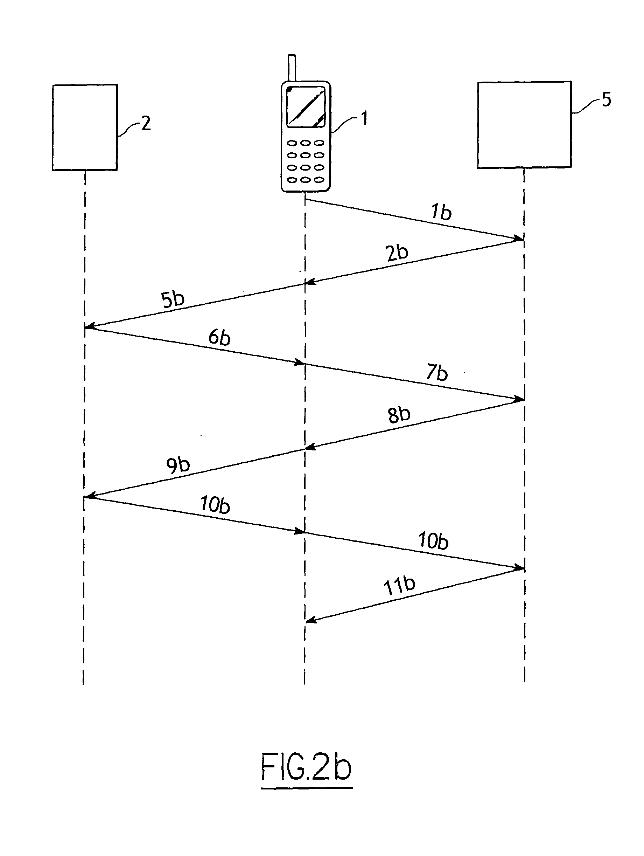

Les figures 2b et 2c sont des représentations schématiques illustrant les échanges entre les différents éléments du système de la figure 1 lorsque le module 2 de contrôle de localisation est connecté au terminal 1.

En référence à la figure 2b, les échanges sont les suivants lorsque le module 2 intègre des moyens de localisation avancés.

Par moyens de localisation avancés, on entend généralement des moyens permettant de réaliser une localisation plus précise que celle pouvant être réalisée par le réseau. A titre d'exemple non limitatif, le module peut ainsi comporter un module de localisation de type GPS ou A-GPS.

Le module 2 étant connecté au terminal 1, celui-ci détermine si le terminal est autorisé à transmettre ou non son information de localisation à une ou plusieurs applications utilisatrices.

Dans une première étape (étape 1b), l'utilisateur du terminal 1 se connecte à une application utilisatrice 5 développant un service basé sur un ou plusieurs localisations.

Dans une deuxième étape (étape 2b), ladite application utilisatrice 5 contacte l'utilisateur afin d'obtenir son assentiment pour qu'une localisation soit réalisée (le terminal recevant une requête de localisation émise par ladite application).

Selon les cas de figure, et comme cela a déjà été mentionné précédemment, soit la fonction de localisation est désinhibée du fait de la simple connexion du module 2 au terminal 1 (par exemple du fait que le module, mécaniquement fixé au terminal 1, a ses moyens formant interrupteur en position MARCHE), soit le terminal interroge le module 2 pour savoir si la fonction de localisation est désinhibée ou non.

Lorsque la fonction de localisation est effectivement désinhibée, le terminal 1 transmet, au cours d'une troisième étape (étape 5b), une requête d'interrogation du module 2 afin de déterminer si ce dernier intègre des fonctions de localisation avancées.

Dans le cadre du mode de réalisation illustré par la figure 2b, le module fournit une réponse positive au terminal (étape 6b). Le terminal transmet alors à l'application utilisatrice une réponse positive (étape 7b) à sa requête d'information de localisation dans laquelle est mentionné le fait que le module intègre bien des fonctions de localisation avancées.

L'application utilisatrice requiert alors au terminal (étape 8b) que la localisation précise du terminal soit réalisée, le terminal passant cette requête (étape 9b) audit module.

Le module réalise alors la localisation de l'utilisateur du terminal et transmet en retour à l'application utilisatrice (étape 10b) l'information de localisation de l'utilisateur du terminal.

L'application utilisatrice est alors en mesure d'offrir à l'utilisateur un service géodépendant (étape 11 b).

En variante au mode de réalisation illustré par la figure 2b, on considère le cas où le terminal comporte des moyens de localisation avancés, par exemple un dispositif de localisation de type GPS ou A-GPS, alors que le module 2 comporte également des moyens de localisation avancés.

Dans un tel cas de figure, l'une ou l'autre des informations de localisation (c'est-à-dire celle émanant du terminal, celle émanant du module ou encore celle émanant du réseau) est transmise à l'application utilisatrice, et de manière préférentielle c'est l'information de localisation la plus précise qui est transmise à et utilisée par l'application utilisatrice.

Selon un mode de réalisation particulier de l'invention, le terminal dispose d'informations relatives aux capacités de localisation du module (précision, disponibilité) ainsi qu'à ses propres capacités de localisation.

Lesdites informations peuvent être notifiées par le terminal au réseau et/ou à l'application utilisatrice.

Le réseau ou l'application peuvent ainsi choisir, en particulier en fonction des circonstances (disponibilité des différentes informations à un moment donné, précision souhaitée par l'application selon le service offert à l'utilisateur) l'une ou l'autre des informations de localisation.

En référence à la figure 2c, les échanges sont les suivants lorsque ni le module 2, ni le terminal 1 n'intègrent de moyens de localisation avancés.

Dans une première étape (étape 1c), l'utilisateur du terminal 1 se connecte à une application utilisatrice 5 développant un service basé sur un ou plusieurs localisations.

Dans une deuxième étape (étape 2c), ladite application utilisatrice 5 contacte l'utilisateur afin d'obtenir son assentiment pour qu'une localisation soit réalisée.

Selon les cas de figure, et comme cela a déjà été mentionné précédemment, soit la fonction de localisation est désinhibée du fait de la simple connexion du module 2 au terminal 1 (par exemple du fait que le module, mécaniquement fixé au terminal 1, a en outre ses moyens 7 formant interrupteur en position MARCHE), soit le terminal interroge le module 2 pour savoir si la fonction de localisation est désinhibée ou non.

Lorsque la fonction de localisation est effectivement désinhibée, le terminal peut transmettre, au cours d'une troisième étape (étape 5c), une requête au module afin de déterminer si ce dernier intègre des fonctions de localisation avancées.

Alternativement, en particulier lorsque le module est une simple clé physique, lorsque la fonction de localisation est effectivement désinhibée, le terminal peut directement fournir (sans interrogation du module) à l'application utilisatrice une réponse à sa requête dans laquelle est mentionné le fait que ni lui, ni le module n'intègrent de fonctions de localisation avancées, mais qu'une localisation par le réseau est autorisée par l'utilisateur.

Dans le cadre du mode de réalisation illustré par la figure 2c, le module est interrogé (étape 5c) et ledit module fournit une réponse négative au terminal (étape 12c). Le terminal transmet alors à l'application utilisatrice une réponse négative (étape 13c) à sa requête d'information de localisation dans laquelle est mentionné le fait que le module n'intègre pas de fonctions de localisation avancées.

Les seules informations de localisation disponibles sont alors celles qui peuvent être déterminées par le réseau. Le service de l'application utilisatrice est ainsi fourni à l'utilisateur (étape 11c) sur la base de ces seules informations de localisation déterminées par le réseau.

En variante au mode de réalisation illustré par la figure 2c, on considère le cas où le terminal 1 comporte des moyens de localisation avancés, par exemple un module de localisation de type GPS ou A-GPS, alors que le module 2 ne comporte pas de moyens de localisation avancés.

Dans un tel cas de figure, l'une ou l'autre des informations de localisation (c'est-à-dire ici celle émanant du réseau ou celle émanant du terminal) est transmise à l'application utilisatrice, et de manière préférentielle c'est l'information de localisation la plus précise des deux (généralement celle émanant du terminal), qui est transmise à et utilisée par l'application utilisatrice.

Selon un mode de réalisation particulier de l'invention, le terminal dispose d'informations relatives à ses propres capacités de localisation (précision, disponibilité).

Lesdites informations peuvent être notifiées par le terminal au réseau et/ou à l'application utilisatrice.

Le réseau ou l'application peuvent ainsi choisir, en particulier en fonction des circonstances (disponibilité des différentes informations à un moment donné, précision souhaitée par l'application selon le service offert à l'utilisateur) l'une ou l'autre des informations de localisation.

On mentionne ci-après le cas particulier des appels d'urgence. Lorsqu'un utilisateur requiert un service d'urgence ou de secours, celui-ci doit effectivement pouvoir être localisé, et cela même si la fonction de localisation est inhibée.

L'opérateur de téléphonie mobile auquel l'usager est abonné dispose alors d'une base de données référençant les numéros des services d'urgence et de secours toujours habilités à recevoir l'information de localisation.

Ainsi, lorsqu'un utilisateur requiert ces services, sa localisation doit être fournie auxdits services, et cela que le module de contrôle de localisation soit connecté ou non audit terminal.

La localisation de l'utilisateur est déterminée à tout le moins à l'aide des méthodes de localisation mises en oeuvre par l'infrastructure du réseau.

L'opérateur doit cependant être en mesure de fournir l'information de localisation la plus précise qu'il dispose.

C'est pourquoi si le terminal intègre un dispositif de localisation, c'est l'information de localisation déterminée par ce dispositif qui sera transmise auxdits services d'urgence et de secours.

De la même manière si le module de contrôle de localisation intègre un dispositif de localisation (ledit module étant par exemple connecté au terminal mais ayant ses moyens formant interrupteur en position ARRET), l'opérateur peut toutefois activer la fonction de localisation et disposer (éventuellement en conservant la clé privée du système cryptographique évoqué précédemment) de la localisation réalisée par ledit dispositif intégré audit module.

Enfin lorsque le terminal et le module de contrôle de localisation intègrent chacun un dispositif de localisation, c'est préférentiellement l'information la plus précise qui est transmise auxdits services d'urgence et de secours.

## Revendications

1. Ensemble pour contrôler la fourniture d'informations de localisation comprenant un terminal (1) de téléphonie mobile apte à interagir à distance avec une ou plusieurs applications (5) dites utilisatrices mettant en oeuvre des services utilisant des informations de localisation de l'utilisateur dudit terminal,
**caractérisé en ce qu'**il comprend un module (2) de contrôle de localisation distinct du terminal et apte à être connecté audit terminal (1) par l'utilisateur, ledit module (2) comportant des moyens (8) pour autoriser ou non la fourniture d'informations de localisation de l'utilisateur du terminal à une ou plusieurs applications utilisatrices.

2. Ensemble selon la revendication 1, **caractérisé en ce que** le module (2) de contrôle de localisation comporte des moyens de fixation mécanique au terminal pour connecter ledit module audit terminal.

3. Ensemble selon la revendication précédente, **caractérisé en ce que** la fixation mécanique dudit module est amovible.

4. Ensemble selon l'une des deux revendications précédentes, **caractérisé en ce que** ledit module est alimenté électriquement par le terminal suite à la fixation dudit module au terminal.

5. Ensemble selon l'une des revendications 2 à 4, **caractérisé en ce que** ledit module comporte des moyens (7) formant interrupteur, et **en ce que** l'actionnement par l'utilisateur desdits moyens (7) formant interrupteur en position MARCHE est nécessaire pour connecter ledit module au terminal.

6. Ensemble selon la revendication 1, **caractérisé en ce que** ledit module comporte des moyens (7) formant interrupteur, et **en ce que** lesdits module et terminal disposent de moyens permettant d'assurer leur connexion à distance par liaison radio, suite à l'actionnement par l'utilisateur desdits moyens (7) formant interrupteur en position MARCHE.

7. Ensemble selon l'une des revendications 2 à 6, **caractérisé en ce que** lesdits moyens (8) pour autoriser ou non la fourniture d'informations de localisation du terminal à une ou plusieurs applications utilisatrices autorise la fourniture desdites informations de localisation lorsque ledit module de contrôle de localisation est connecté audit terminal.

8. Ensemble selon la revendication précédente, **caractérisé en ce que** les informations de localisation sont transmises à une application utilisatrice en réponse à une requête d'accès auxdites informations de localisation issue de ladite application utilisatrice.

9. Ensemble selon l'une des revendications précédentes, **caractérisé en ce que** ledit terminal comporte des moyens pour gérer une séquence d'étapes comportant:
• l'envoi (1a, 1b, 1c) d'une requête d'accès à un service mis en oeuvre par une application utilisatrice ;
• la réception (2a, 2b, 2c) d'une requête d'accès à des informations de localisation de l'utilisateur émise par ladite application utilisatrice;
• la détermination de l'état autorisé ou non de la fourniture d'informations de localisation;
• l'envoi (3a, 7b, 13c) à ladite application d'une réponse relative à ladite requête de localisation.

10. Ensemble selon la revendication précédente **caractérisé en ce que**, lorsque la fourniture d'informations de localisation est déterminée comme étant non autorisée, ladite séquence d'étapes comporte en outre une étape (4a) de réception d'une notification à l'utilisateur de l'indisponibilité du service mis en oeuvre par ladite application utilisatrice.

11. Ensemble selon la revendication 9 **caractérisé en ce que**, lorsque la fourniture d'informations de localisation est déterminée comme étant autorisée, ladite séquence d'étapes comporte en outre une étape d'interrogation (5b, 5c) dudit module pour savoir s'il intègre des moyens permettant de déterminer sa localisation, la réponse renvoyée (7b, 13c) à ladite application utilisatrice lui notifiant à la fois l'autorisation de la fourniture d'informations de localisation et l'éventuelle intégration audit module de moyens permettant de déterminer sa localisation.

12. Ensemble selon la revendication précédente dans lequel ledit module intègre des moyens permettant de réaliser sa localisation, **caractérisé en ce que** ladite séquence d'étapes comporte en outre les étapes :
• de réception (8b, 9b) d'une requête de l'application utilisatrice (5) de réalisation de la localisation de l'utilisateur ;
• de requête de réalisation de la localisation par lesdits moyens intégrés audit module (2) ;
• de réception depuis ledit module et de renvoi (10b) à ladite application (5) des informations de localisation déterminées;
• de fourniture (11b) à l'utilisateur dudit service mis en oeuvre par ladite application par utilisation desdites informations de localisation.

13. Ensemble selon la revendication 11 dans lequel ledit module n'intègre pas de moyens permettant de réaliser sa localisation, **caractérisé en ce que** ladite séquence d'étapes comporte en outre l'étape de fourniture (11c) à l'utilisateur dudit service mis en oeuvre par ladite application par utilisation d'informations de localisation déterminées à l'aide de l'infrastructure du réseau cellulaire par l'intermédiaire duquel communiquent le terminal et ladite application utilisatrice.

14. Ensemble selon l'une des deux revendications précédentes, dans lequel le terminal intègre des moyens permettant de réaliser sa localisation, **caractérisé en ce que** les informations de localisation déterminées par le terminal sont renvoyées à l'application utilisatrice et **en ce que** le service mis en oeuvre par ladite application utilise des informations de localisation parmi celles qui lui ont été renvoyées et celles déterminées à l'aide de l'infrastructure du réseau cellulaire par l'intermédiaire duquel communiquent le terminal et ladite application utilisatrice, notamment en fonction de la disponibilité et de la précision de chacune desdites informations de localisation.

15. Ensemble selon la revendication précédente, dans lequel le terminal peut intégrer des moyens permettant de réaliser la localisation, **caractérisé en ce que** le terminal dispose, le cas échéant, d'informations relatives à ses propres capacités de localisation et, le cas échéant, d'informations relatives aux capacités de localisation du module, et notifie lesdites informations de capacité au réseau et/ou à l'application utilisatrice et **en ce que** le service mis en oeuvre par ladite application utilise des informations de localisation parmi celles qui peuvent être déterminées à l'aide de l'infrastructure du réseau cellulaire par l'intermédiaire duquel communiquent le terminal et ladite application utilisatrice, et, le cas échéant, celles qui peuvent être déterminées par le terminal, et, le cas échéant, celles qui peuvent être déterminées par le module, notamment en fonction de la disponibilité et de la précision de chacune desdites informations de localisation.

16. Ensemble selon l'une des revendications précédentes, **caractérisé en ce que** un système cryptographique de type certificat numérique est utilisé pour crypter les échanges entre le module et le terminal de manière à ce que seul ledit module puisse venir autoriser la fourniture d'informations de localisation de l'utilisateur.

17. Module (2) de contrôle de localisation pour un ensemble selon l'une des revendications précédentes, **caractérisé en ce qu'**il est distinct du terminal et **en ce qu'**il comporte des moyens de connexion (6) au terminal (1) de téléphonie mobile d'un tel ensemble, ainsi que des moyens (8) pour autoriser ou non la fourniture d'informations de localisation de l'utilisateur du terminal à une ou plusieurs applications utilisatrices.

18. Module selon la revendication précédente, **caractérisé en ce qu'**il comporte des moyens pour sa fixation mécanique sur un terminal de téléphonie mobile d'un ensemble selon les revendications 1 à 15.

19. Terminal de téléphonie mobile **caractérisé en ce que** ledit terminal est un terminal pour un ensemble selon l'une des revendications 1 à 15 et comporte des moyens pour sa connexion à un module de contrôle de localisation distinct du terminal et apte à autoriser ou non la fourniture d'informations de localisation de l'utilisateur du terminal à une ou plusieurs applications utilisatrices.
